# EUROPEAN PATENT APPLICATION

(11) **EP 1 204 213 A1**
(43) Date of publication of application: **08.05.2002**
(21) Application number: 00937208.7
(22) Date of filing: 12.06.2000
(51) Int. Cl.: H04B 1/16, H04B 1/40, H04B 7/26

(54) **MOBILE WIRELESS COMMUNICATION DEVICE**

(71) Applicant: MITSUBISHI DENKI KABUSHIKI KAISHA, Tokyo 100-8310 (JP)
(72) Inventor: SADAHIRO, Keiichi, Mitsubishi Denki K.K., Tokyo 100-8310 (JP)
(74) Representative: Popp, Eugen, Dr.
(86) International application number: JP0003809
(87) International publication number: WO0197393

(57) **Abstract**

A mobile radio communication device having a variable-voltage power supply unit 42 for supplying to a radio section 2 a first power supply voltage, which is the power supply voltage for normal operation, or a second power supply voltage lower than the first power supply voltage, and a memory 34 for previously storing a gain difference between the detection of the receive field strength when the power supply voltage supplied to the radio section 2 is the first power supply voltage and that when the above power supply voltage is the second power supply voltage, in which, to detect the receive field strength, the second power supply voltage is supplied to the radio section 2, and the detected receive field strength is corrected according to the gain difference stored in the memory 34.

## Description

### Technical Field

This invention is related to a mobile radio communication device such as a mobile telephone, and particularly to a mobile radio communication device in which the current consumption is reduced.

### Background Art

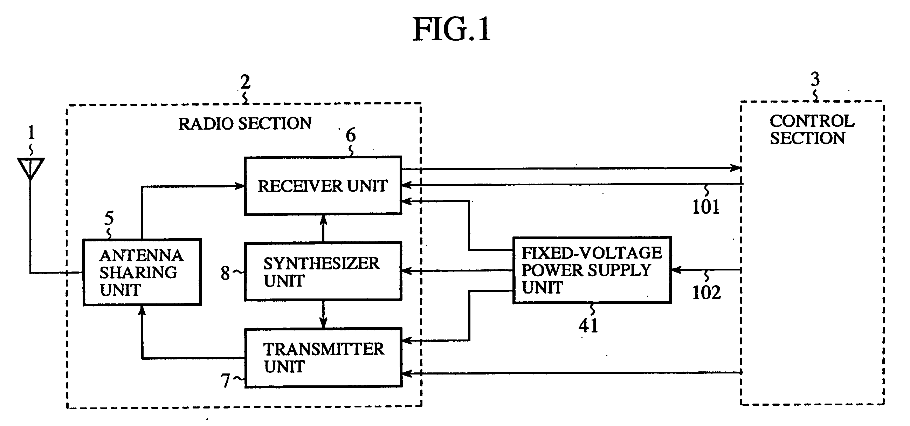

Fig. 1 is a block diagram showing a construction of the conventional mobile radio communication device such as a mobile telephone, and generally a mobile radio communication device comprises, as shown in the figure, an antenna 1, a radio section 2, a control section 3, and a fixed-voltage power supply unit 41.

The radio section 2 consists of an antenna sharing unit 5, a receiver unit 6, a transmitter unit 7, and a synthesizer unit 8, and the current consumption of the mobile radio communication device is reduced by turning ON/OFF the fixed power supply voltage output from the fixed-voltage power supply unit 41, as needed, by means of the ON/OFF control signal 102 from the control section 3. Further, there is also the one in which, at the time of reception, the gain of the amplifier in the receiver unit 6 is variably controlled by a gain control signal 101 from the control section 3.

However, in such a method of controlling the fixed power supply voltage, the power supply voltage needs to be kept ON for a long time for portions which require a certain time for its stabilization since the turning ON of the power supply voltage, and in a mobile radio communication device which performs an intermittent operation such as the time division multiple access, if the intermittent operation interval is short, it is also needed to keep the power supply voltage ON for a long time, so there was a problem that the current consumption could not fully be reduced.

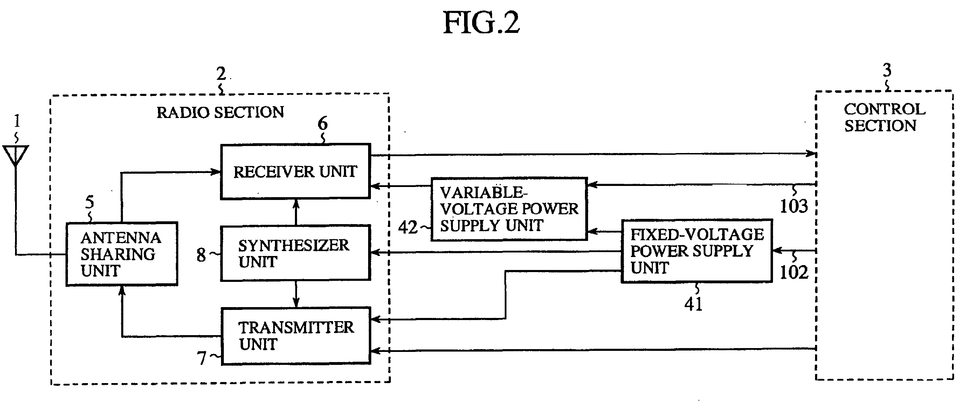

Fig. 2 is a block diagram showing a conventional mobile radio communication device having a variable-voltage power supply section, and it includes a variable-voltage power supply unit 42 which varies the output power supply voltage according to a voltage control signal 103 from the control section 3, and a method is employed in which variable control of the power supply voltage of the receiver unit 6 is carried out within the range of enabling the receiving quality to be maintained, thereby to reduce the current in the receiver unit 6.

For instance, there are a system in which the error rate of received data is detected to control the current supply to the receiver unit 6 according to the receive state only during standby, as shown in Japanese Patent Application Laid Open No. 8-18500, and a method in which the power supply voltage of the radio section 2 is controlled according to the receive field strength to reduce the current within the range of maintaining the receiving quality, as shown in Japanese Patent Application Laid Open No. 5-37408.

However, these approaches had a problem that, even if no full receiving performance is not required, for instance, when monitoring the field strength of a neighboring base station, the normal operation is performed to maintain the receiving quality when the receive field strength is small, so the current cannot fully be reduced.

Further, in the above Japanese Patent Application Laid Open No. 5-37408, the power supply voltage is controlled also in the receive state, but there was a problem that it is less effective as compared with the method in which the gain of the amplifier or the like in the receiver unit 6 is controlled according to the receive field strength, and there was a further problem that it is unclear whether or not the receiving quality can be maintained for a rapid change in the receive field strength.

This invention has been accomplished to solve the above problems, aiming at obtaining a mobile radio communication device in which the current consumption can be reduced, with a simple construction and control, in portions requiring no full performance during operation.

### Disclosure of The Invention

The mobile radio communication device related to this invention comprises: a receiver unit for receiving transmitted radio waves; a synthesizer unit for outputting a local oscillation signal by which the receiver unit carries out a frequency conversion; a variable-voltage power supply unit for supplying to the receiver unit and the synthesizer unit a first power supply voltage that is the power supply voltage for normal operation, or a second power supply voltage lower than the first power supply voltage, provided that those units operate; a control signal processing unit for outputting a voltage control signal by which the variable-voltage power supply unit outputs the first power supply voltage or the second power supply voltage; a field strength detecting unit for detecting the received field strength when the receiver unit receives radio waves; and a memory for previously storing a gain difference between the gain at the detection of the receive field strength when the power supply voltage supplied from the variable-voltage power supply unit to the receiver unit and the synthesizer unit is the first power supply voltage and that when the above power supply voltage is the second power supply voltage; in which, when the field strength detecting unit detects the receive field strength, the power supply voltage to be supplied from the variable-voltage power supply unit to the receiver unit and the synthesizer unit is set to the second power supply voltage by a voltage control signal from the control signal processing unit, and the detected receive field strength is corrected according to the gain difference stored in the memory.

This provides an advantage that the current consumption in portions requiring no full performance can be reduced in a mode other than the receive operation or the transmit operation.

In the mobile radio communication device related to this invention, for a mode other than receiving, or at the time of idling, the power supply voltage supplied from the variable-voltage power supply unit to the synthesizer unit is set to the second power supply voltage by a voltage control signal output from the control signal processing unit, and at the time of reception, the power supply voltage supplied from the variable-voltage power supply unit to the synthesizer unit is set to the first power supply voltage by the voltage control signal output from the control signal processing unit.

This provides an advantage that the current consumption can be reduced in the synthesizer unit, for which a certain time is taken until the frequency of its output local oscillation signal converges.

In the mobile radio communication device related to this invention, the power supply voltage of the receiver unit is turned OFF except for reception, and to start reception, the power supply voltage supplied from the variable-voltage power supply unit to the receiver unit is set, before reception, to the second power supply voltage by the voltage control signal output from the control signal processing unit, and the power supply voltage supplied from the variable-voltage power supply unit to the receiver unit is set, just before reception, to the first power supply voltage by the voltage control signal output from the control signal processing unit.

This provides an advantage that the current consumption in the receiver unit except for reception can be reduced.

The mobile radio communication device related to this invention includes a transmitter unit for transmitting a radio wave, and in which the power supply voltage of the transmitter unit is turned OFF except for transmission, and to start transmission, the power supply voltage supplied from the variable-voltage power supply unit to the transmitter unit is set, before transmission, to the second power supply voltage by the voltage control signal that is output by the control signal processing unit, and the power supply voltage supplied from the variable-voltage power supply unit to the transmitter unit is set, just before transmission, to the first power supply voltage by the voltage control signal output from the control signal processing unit.

This provides an advantage that the current consumption in the transmitter unit except for transmission can be reduced.

The mobile radio communication device related to this invention comprises: a receiver unit for receiving transmitted radio waves; a synthesizer unit for outputting a local oscillation signal by which the receiver unit carries out a frequency conversion; a variable bias unit for supplying to the receiver unit and the synthesizer unit a first bias that is the bias for the normal operation, or a second bias that is lower than the first bias, provided that those units operate; a control signal processing unit for outputting a bias control signal by which the variable bias unit outputs the first bias or the second bias; a field strength detecting unit for detecting the received field strength when the receiver unit receives radio waves; and a memory for previously storing a gain difference between the gain at the detection of the received field strength when the bias supplied from the variable bias unit to the receiver unit and the synthesizer unit is the first bias and that when the above bias is the second bias; in which, when the field strength detecting unit detects the receive field strength, the bias to be supplied from the variable bias unit to the receiver unit and the synthesizer unit is set to the second bias by a bias control signal from the control signal processing unit, and the detected receive field strength is corrected according to the gain difference stored in the memory.

This provides an advantage that the current consumption in portions requiring no full performance except for the receive operation or the transmit operation can be reduced.

In the mobile radio communication device related to this invention, for a mode other than receiving, or at the time of idling, the bias supplied from the variable bias unit to the synthesizer unit is set to the second bias by the bias control signal output from the control signal processing unit, and at the time of reception, the bias supplied from the variable bias unit to the synthesizer unit is set to the first bias by the bias control signal output from the control signal processing unit.

This provides an advantage that the current consumption can be reduced in the synthesizer unit, for which a certain time is taken until the frequency of its output local oscillation signal converges.

In the mobile radio communication device related to this invention, the power supply voltage of the receiver unit is turned OFF except for reception, and to start reception, the bias supplied from the variable bias unit to the receiver unit is set, before reception, to the second bias by the bias control signal is output from the control signal processing unit, and the bias supplied from the variable bias unit to the receiver unit is set, just before reception, to the first bias by the bias control signal output from the control signal processing unit.

This provides an advantage that the current consumption in the receiver unit except for reception can be reduced.

The mobile radio communication device related to this invention includes a transmitter unit for transmitting a radio wave, and in which the power supply voltage of the transmitter unit is turned OFF except for transmission, and to start transmission, the bias supplied from the variable bias unit to the transmitter unit is set, before transmission, to the second bias by the bias control signal output from the control signal processing unit, and the bias supplied from the variable bias unit to the transmitter unit is set, just before transmission, to the first bias by the bias control signal output from the control signal processing unit.

This provides an advantage that the current consumption in the transmitter unit except for transmission can be reduced.

The mobile radio communication device related to this invention comprises: a receiver unit for receiving transmitted radio waves; a synthesizer unit for outputting a local oscillation signal by which the receiver unit carries out a frequency conversion; a variable-voltage power supply unit for supplying to the receiver unit and the synthesizer unit a first power supply voltage that is the power supply voltage for normal operation, or a second power supply voltage that is lower than the first power supply voltage, provided that those units operate; a variable bias unit for supplying to the receiver unit and the synthesizer unit a first bias that is the bias for the normal operation, or a second bias that is lower than the first bias, provided that those units operate; a control signal processing unit for outputting a voltage control signal by which the variable-voltage power supply unit outputs the first power supply voltage or the second power supply voltage, and by which the variable bias unit outputs the first bias or the second bias, a field strength detecting unit for detecting the received field strength when the receiver unit receives radio waves; and a memory for previously storing a gain difference between the gain at the detection of the receive field strength when the power supply voltage supplied from the variable-voltage power supply unit to the receiver unit and the synthesizer unit is the first power supply voltage, and also the bias supplied from the variable bias unit to the receiver unit and the synthesizer unit is the first bias, and that when the power supply voltage supplied from the variable-voltage power supply unit to the receiver unit and the synthesizer unit is the second power supply voltage, and also the bias supplied from the variable bias unit to the receiver unit and the synthesizer unit is the second bias; in which, when the field strength detecting unit detects the receive field strength, the power supply voltage to be supplied from the variable-voltage power supply unit to the receiver unit and the synthesizer unit is set to the second power supply voltage by the voltage control signal from the control signal processing unit, while the bias to be supplied from the variable bias unit to the receiver unit and the synthesizer unit is set to the second bias, and the detected receive field strength is corrected according to the gain difference stored in the memory.

This provides an advantage that the current consumption in portions requiring no full performance except for the receive operation or the transmit operation can be reduced.

In the mobile radio communication device related to this invention, for a mode other than receiving, or at the time of idling, the power supply voltage supplied from the variable-voltage power supply unit to the synthesizer unit is set to the second power supply voltage by a voltage control signal output from the control signal processing unit, while the bias supplied from the variable bias unit to the synthesizer unit is set to the second bias by a bias control signal output from the control signal processing unit, and at the time of reception, the power supply voltage supplied from the variable-voltage power supply unit to the synthesizer unit is set to the first power supply voltage by the voltage control signal output from the control signal processing unit, while the bias supplied from the variable bias unit to the synthesizer unit is set to the first bias by the bias control signal that is output by the control signal processing unit.

This provides an advantage that the current consumption can be reduced in the synthesizer unit, for which a certain time is taken until the frequency of its output local oscillation signal converges.

In the mobile radio communication device related to this invention, the power supply voltage of the receiver unit is turned OFF except for reception, and to start reception, before reception, the power supply voltage supplied from the variable-voltage power supply unit to the receiver unit is set to the second power supply voltage by the voltage control signal output from the control signal processing unit, while the bias supplied from the variable bias unit to the receiver unit is set to the second bias by the bias control signal output from the control signal processing unit, and just before reception, the power supply voltage supplied from the variable-voltage power supply unit to the receiver unit is set to the first power supply voltage by the voltage control signal output from the control signal processing unit, while the bias supplied from the variable bias unit to the receiver unit is set to the first bias by the bias control signal output from the control signal processing unit.

This provides an advantage that the current consumption in the receiver unit except for reception can be reduced.

The mobile radio communication device related to this invention includes a transmitter unit for transmitting a radio wave, and in which the power supply voltage of the transmitter unit is turned OFF except for transmission, and to start transmission, before transmission, the power supply voltage supplied from the variable-voltage unit to the transmitter unit is set to the second power supply voltage by the voltage control signal output from the control signal processing unit, while the bias supplied from the variable bias unit to the transmitter unit is set to the second bias by the bias control signal output from the control signal processing unit, and just before transmission, the power supply voltage supplied from the variable-voltage power supply unit to the transmitter unit is set to the first power supply voltage by the voltage control signal output from the control signal processing unit, while the bias supplied from the variable bias unit to the transmitter unit is set to the first bias by the bias control signal output from the control signal processing unit.

This provides an advantage that the current consumption in the transmitter unit except for transmission can be reduced.

### Brief Description of the Drawings

Fig. 1 is a block diagram showing the construction of a conventional mobile radio communication device;
Fig. 2 is a block diagram showing the construction of a conventional mobile radio communication device having a variable-voltage power supply unit;
Fig. 3 is a block diagram showing the construction of the mobile radio communication device according to a first embodiment for carrying out this invention;
Fig. 4 is a chart showing the power supply voltage control timing according to the first embodiment for carrying out this invention;
Fig. 5 is a block diagram showing the construction of the mobile radio communication device according to a second embodiment for carrying out this invention; and
Fig. 6 is a block diagram showing the construction of the mobile radio communication device according to a third embodiment for carrying out this invention.

### Best Modes for Carrying Out the Invention

Now, to describe this invention more specifically, the best mode for carrying out this invention is described according to the accompanying drawings.

### (First embodiment)

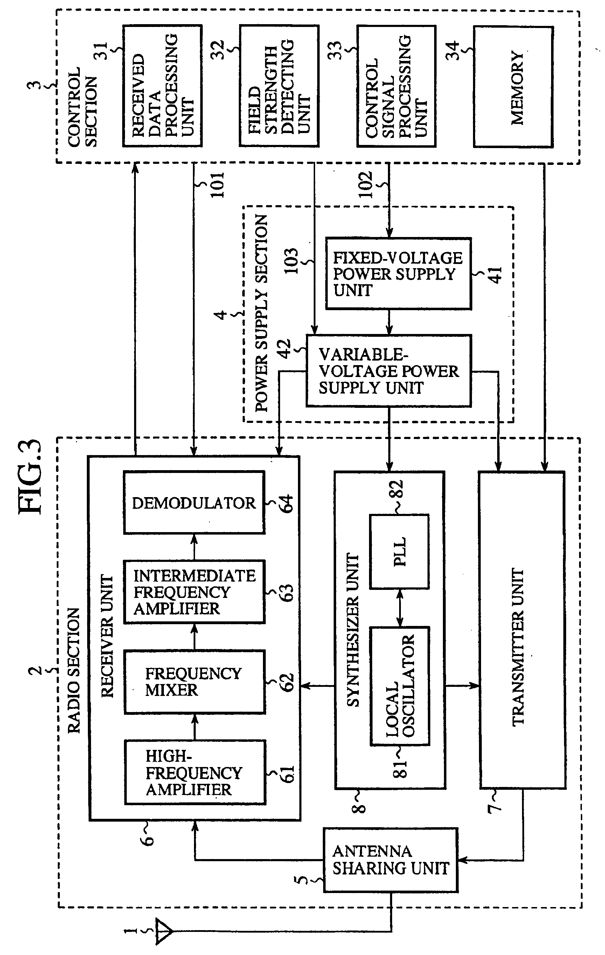

Fig. 3 is a block diagram showing the construction of the mobile radio communication device according to the first embodiment for carrying out this invention. Herein, description is made, for instance, to a mobile radio communication device using the time division multiple access (hereinafter referred to as TDMA), one of the mobile communication access systems for digital mobile telephone or the like.

As shown in Fig. 3, a mobile radio communication device comprises an antenna 1, a radio section 2, a control section 3 and a power supply section 4; wherein the radio section 2 consists of an antenna sharing unit 5, a receiver unit 6, a transmitter unit 7 and a synthesizer unit 8; the receiver unit 6 consists of a high-frequency amplifier 61, a frequency mixer 62, an intermediate frequency amplifier 63, and a demodulator 64; and the synthesizer unit 8 consists of a.local oscillator 81, and a PLL 82.

Further, the control section 3 is made up of a received data processing unit 31 for processing demodulated received data, a field strength detecting unit 32 for detecting receive field strength, a control signal processing unit 33 for outputting a gain control signal 101, an ON/OFF control signal 102 and a voltage control signal 103, and a memory 34 for previously storing a gain difference between the gain at the detection of received field strength when the power supply voltage of the receiver unit 6 and the synthesizer unit 8 is a power supply voltage for normal operation and the gain at the detection of receive field strength when the above power supply voltage being a power supply voltage lower than the power supply voltage for normal operation.

Further, the power supply section 4 consists of a fixed-voltage power supply unit 41 which is controlled by the ON/OFF control signal 103 from the control signal processing unit 33 for generating a fixed voltage, and a variable-voltage power supply unit 42, which outputs a power supply voltage VH (first power supply voltage) for normal operation and a power supply voltage VL (second power supply voltage) lower than the power supply voltage VH for normal operation according to the voltage control signal 103 from the control signal processing unit 33.

The operation is described below.

A radio wave sent from a base station (not shown) is received at the antenna 1, and the received high-frequency signal is input to the receiver unit 6 through the antenna sharing unit 5. The received high-frequency signal is subjected to high-frequency amplification by the high-frequency amplifier 61, and in the frequency mixer 62, it is mixed with the local oscillation signal from the local oscillator 81 in the synthesizer unit 8 and subjected to frequency conversion to an intermediate frequency signal. Further, the intermediate frequency signal is demodulated by the demodulator 64, after amplified by the intermediate frequency amplifier 63, and subjected to data processing by the received data processing unit 31.

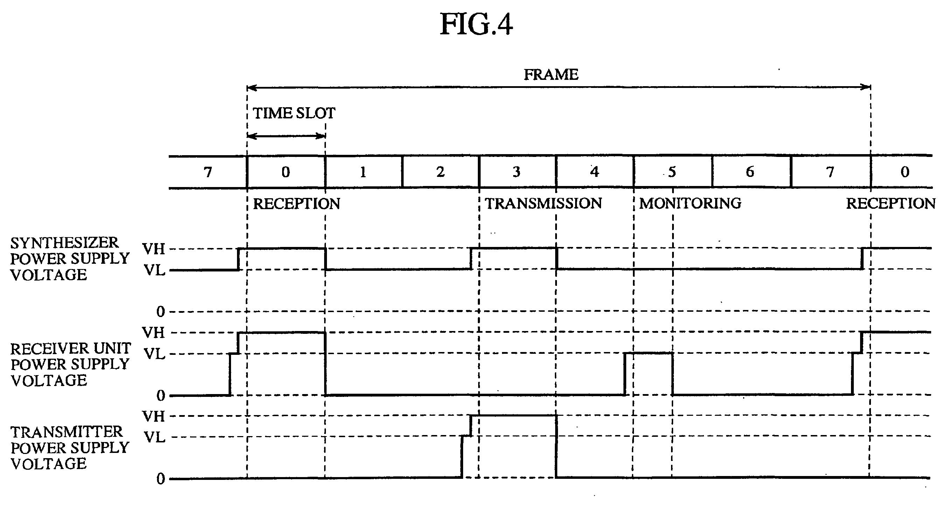

Now, the TDMA system is simply described. Fig. 4 is a chart showing the power supply voltage control timing according to the first embodiment for carrying out this invention. The TDMA frame in the figure shows one TDMA frame construction for a telephone call in the GSM (Global System for Mobile Communications), which is a pan-European system.

In the GSM, one TDMA frame (4.615 mS) is divided into eight, and it consists of eight time slots 0-7 (1 time slot = 577 µS). A telephone call is based on a periodical pattern, in which a receive operation (zeroth slot) and a send operation (third slot) are performed for one slot, respectively, in one frame. The remaining six slots are idle slots which are not related to a call, and the idle slots allow the monitoring of the receive field strength from a neighboring base station.

It is assumed that the monitoring of the receive field strength is carried out by the field strength detecting unit 32 in the half of the fifth slot. The synthesizer unit 8 outputs different frequencies corresponding to the respective channels in reception, transmission, and monitoring. If the power supply voltage of the synthesizer unit 8 is once turned OFF, a certain time is required until data is set in the PLL 82 and the local oscillator 81 converges to a desired frequency after the turning ON, and thus, during a call, the power supply voltage of the synthesizer unit 8 is always put in the ON state by the ON/OFF control signal 102 from the control signal processing unit 33.

Further, in the idling including monitoring, the power supply voltage output of the variable-voltage power supply unit 42 is controlled by the voltage control signal 103 from the control signal processing unit 33 so as to be set to a power supply voltage VL lower than a power supply voltage VH for normal operation, provided that the synthesizer unit 8 operates, and supplied to the synthesizer unit 8. In addition, in the receive or transmit operation, the power supply voltage of the variable-voltage power supply unit 42 is set to the power supply voltage VH for normal operation by the voltage control signal 103 and supplied to the synthesizer unit 8 a little before each slot.

In starting reception, if it is needed to turn ON the power supply voltage of the receiver unit 6 considerably before the receive slot for some reason, the power supply voltage of the receiver unit 6 is made ON from OFF by the ON/OFF control signal 102 before the receive slot, and it is set to the power supply voltage VL lower than the power supply voltage VH for normal operation by the voltage control signal 103 as long as the receiver unit 6 operates, and set to the power supply voltage VH for normal operation by the voltage control signal 103 just before the receive slop. On the other hand, if no problem is caused by turning ON the power supply voltage just before the receive slot, the power supply voltage of the receiver unit 6 is made ON from OFF just before the receive slot by the ON/OFF control signal 103, and set to the power supply voltage VH for normal operation by the voltage control signal 103.

In starting reception, whether or not the power supply voltage of the receiver unit 6 should be turned ON considerably before the receive slot is already known when the mobile radio communication device is designed or implemented.

In monitoring, the power supply voltage of the receiver unit 6 is set to the power supply voltage VL lower than the power supply voltage VH for normal operation by the voltage control signal 103 within the operation range of the receiver unit 6, and in idling slots other than monitoring, the power supply voltage of the receiver unit 6 is turned OFF by the ON/OFF control signal 102.

In starting transmission, if the power supply voltage of the transmitter unit 7 needs to be turned ON considerably before the transmission slot for some reason, then, before the transmission slot, the power supply voltage of the transmitter unit 7 is turned ON from OFF by the ON/OFF control signal 102, and set to the power supply voltage VL lower than the power supply voltage VH for normal operation by the voltage control signal 103 as long as the transmitter unit 7 operates, and just before the transmission slot, set to the power supply voltage VH for normal operation by voltage control signal 103. On the other hand, if no problem is caused by turning ON the power supply voltage just before the transmission slot, the power supply voltage of the transmitter unit 7 is turned ON from OFF by the ON/OFF control signal 102 just before the transmission slot, and set to the power supply voltage VH for normal operation by the voltage control signal 103.

In starting transmission, whether or not the power supply voltage of the transmitter unit 7 should be turned ON considerably before the transmission slot is already known when the mobile radio communication device is designed or implemented.

At the time of reception, monitoring, or idling other than the transmission slot, the power supply voltage of the transmitter unit 7 is turned OFF by the ON/OFF control signal 102.

As described above, the power supply voltage is OFF in portions in which no problem is caused by turning OFF the power supply voltage, and in portions in which the power supply voltage needs to be ON, the power supply voltage is turned ON and set to the lower power supply voltage VL within the operation range when no full performance is required, for instance, at the time of monitoring, and at the time of reception or transmission, it is set to the power supply voltage VH for normal operation, thereby to reduce the current consumption while maintaining the performance.

Further, if no problem is caused by periodically turning OFF the power supply voltage of the synthesizer unit 8 because the data setting time of the PLL 82 or the convergence time of the local oscillator 81 is short, then, for the data setting time of the PLL 82 or the convergence time of the local oscillator 81 after turning ON the power supply voltage by the ON/OFF control signal 102, the power supply voltage is set to the power supply voltage VL lower than the power supply voltage VH for normal operation by the voltage control signal 103 within the operation range of the synthesizer unit 8, while in the receive or transmit operation, the power supply voltage of the variable-voltage power supply unit 42 is set to the power supply voltage VH for normal operation by the voltage control signal 103 a little before each slot, and the power supply voltage of the synthesizer unit 8 is periodically turned OFF by the ON/OFF control signal 102 in portions where the power supply voltage can be turned OFF.

At the time of monitoring, since the power supply voltage of the receiver unit 6 and the synthesizer unit 8 is set to the power supply voltage VL lower than the power supply voltage VH for normal operation, as compared with the normal reception, the gain of the whole receiver unit 6 becomes lower. Thus, previously stored in the memory 34 is a gain difference between the gain at the detection of the receive field strength when the power supply voltage of the receiver unit 6 and the synthesizer unit 8 is the power supply voltage VH for normal operation and the gain at the detection of receive field strength when it is the power supply voltage VL lower than the power supply voltage VH for normal operation, and a CPU, not shown, in the control section 3 uses this gain difference to correct the detected receive field strength.

If the field strength cannot be detected at the time of monitoring because the receive field strength is too low, the power supply voltage of the receiver unit 6 and the synthesizer unit 8 is set to the power supply voltage VH for normal operation, and monitor reception is performed. If the receive field strength is high, control is made by the gain control signal 191 from the control signal processing unit 33 so that the gain of the amplifier in the receiver unit 6 becomes low, thereby to reduce the current consumption.

As described above, in accordance with the first embodiment, except for the receive or transmit operation, or at the time of idling including monitoring in which full performance is not required, the power supply voltage of the synthesizer unit 8, in which the power supply voltage cannot periodically be turned OFF because a certain time is taken for the frequency convergence, is set to be low by the variable-voltage power supply unit 42 within its operation range, and at the time of monitoring, reception is performed after the power supply voltage is set to be lower than for normal reception by the variable-voltage power supply unit 42 as long as the receiver unit 6 operates, thereby to provide an advantage in the current consumption in portions requiring no full performance can be reduced except for the receive or transmit operation.

At this point, the gain difference of the receiver unit 6 between the power supply voltage VH for normal operation and the low power supply voltage VL is previously stored in the memory 34, and the detected receive field strength is corrected at the time of monitoring, so the monitoring of the receive field strength can fully be performed. Further, since the power supply voltage of each unit is set to the power supply voltage VH for normal operation in the receive or transmit operation, deterioration of the speech quality is prevented.

Further, in accordance with the first embodiment, by setting the power supply voltage supplied to the synthesizer unit 8 to the low power supply voltage VL at the time of idling other than reception, and setting it to the power supply voltage VH for normal operation at the time of reception, such an advantage can be obtained that the current consumption can be reduced in the synthesizer unit 8 in which a certain time is taken until the frequency of the output local oscillation signal converges.

Further, in accordance with the first embodiment, by turning OFF the power supply voltage of the receiver unit 6 except for reception, and when starting reception, by setting the power supply voltage supplied to the receiver unit 6 to the low power supply voltage VL before reception, and setting it to the power supply voltage VH for normal operation just before reception, such an advantage is obtained that the current consumption in the receiver unit 6 except for reception can be reduced.

Furthermore, in accordance with the first embodiment, by turning OFF the power supply voltage of the transmitter unit 7 except for transmission, and when starting transmission, by setting the power supply voltage supplied to the transmitter unit 7 to the low power supply voltage VL before transmission, and setting it to the power supply voltage VH for normal operation just before transmission, such an advantage is obtained that the current consumption in the transmitter unit 7 except for transmission can be reduced.

The present embodiment has been explained as to the case in which the application is conducted to the call by a mobile radio communication device of the TDMA system, However, the application to the monitoring of the receive field strength during standby or to a mobile radio communication device performing an intermittent operation is also possible.

Further, in this embodiment, the power supply voltage is controlled separately for the receiver unit 6, transmitter unit 7, and synthesizer unit 8, but it is also possible that each unit is subdivided for separate control of the timing and power supply voltage; for instance, the synthesizer unit 8 is subdivided into the local oscillator 81 and the PLL 82, and the receiver unit 6 is subdivided into the high-frequency amplifier 61, the frequency mixer 62, the intermediate frequency amplifier 63, and the demodulator 64. In this case, an advantage of higher reduction in the current consumption can be obtained.

Moreover, not only the power supply voltage of the radio section 2 but also the power supply voltage of other portions (control section 3 and the like) in a mobile radio communication device can also be similarly controlled.

### (Second embodiment)

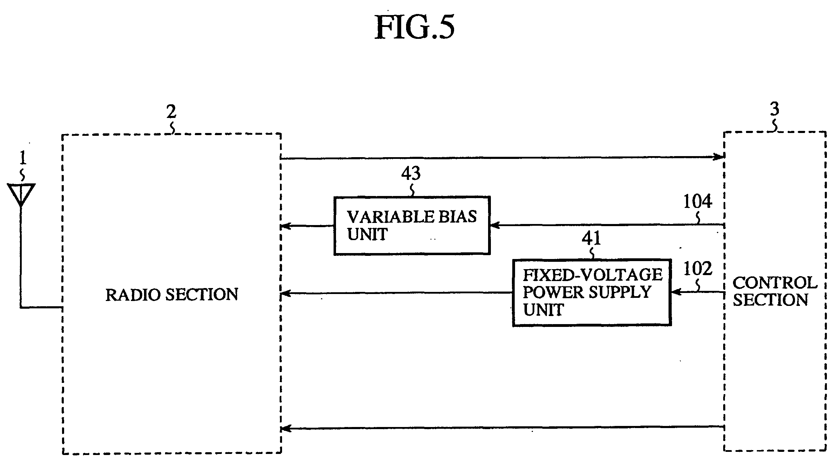

Although, in the above first embodiment, the power supply voltage of each unit is variably controlled by the variable-voltage power supply unit 42, the bias of each amplifier or the like may be variably controlled. Fig. 5 is a block diagram showing the construction of the mobile radio communication device according to the second embodiment for carrying out this invention, and instead of the variable-voltage power supply unit 42 in Fig. 3 of the first embodiment, it is provided with a variable bias unit 43 for variably controlling the bias supplied to the radio section 2 by a bias control signal 104 from the control signal processing unit 33. And, by the bias control signal 104, the variable bias unit 43 supplies a bias for normal operation (first bias) and a bias smaller than the bias for normal operation (second bias) to the radio section 2 within its operation range.

Further, the radio section 2 and the control section 3 have the same structural elements as Fig. 3 of the first embodiment, though not shown.

The operation is now described.

The bias control timing in the second embodiment for carrying out this invention is the same as the power supply voltage control timing in Fig. 4 of the first embodiment. In a manner similar to the first embodiment, when full performance is not required, for instance, at the time of monitoring, the variable bias unit 43 uses the bias control signal 104 to perform variable control so as to decrease the bias to be supplied to each amplifier in the receiver unit 6 and the local oscillator 81 in the synthesizer unit 8, thereby reducing the current consumption.

At the time of monitoring, since the bias supplied to the receiver unit 6 and the synthesizer unit 8 is set smaller than the normal bias as compared with the normal reception time, the gain of the whole receiver unit 6 becomes low. Thus, previously stored in the memory 34 is a gain difference between the gain at the detection of receive field strength when the bias of the receiver unit 6 and the synthesizer unit 8 is the bias for normal operation and the gain at the detection of receive field strength when the bas is smaller than that for normal operation, and a CPU, not shown, in the control section 3 uses the gain difference to correct the detected receive field strength.

The variable control of bias enables the time required until the stabilization of the operation of each unit to be shortened with a simple construction, as compared with the variable control of power supply voltage.

As described above, in accordance with the second embodiment, by variably controlling the bias supplied by the variable bias unit 24, an advantage is obtained that, in time slots other than reception or transmission, the current consumption can be reduced in portions requiring no full performance.

Further, in accordance with the second embodiment, by setting the bias supplied to the synthesizer unit to a bias lower than the bias for normal operation at the time of idling other than reception, and setting it to the bias for normal operation at the time of reception, such an advantage is obtained that the current consumption can be reduced in the synthesizer unit in which a certain time is required until the frequency of the output local oscillation signal converges.

Further, in accordance with the second embodiment, by turning OFF the power supply voltage of the receiver unit 6 except for reception, and when starting reception, by setting the bias supplied to the receiver unit 6 to the low bias before reception, and to the bias for normal operation just before reception, an advantage is obtained that the current consumption of the receiver unit 6 except for reception can be reduced.

Furthermore, in accordance with the second embodiment, by turning OFF the power supply voltage of the transmitter unit 7 except for transmission, and when starting transmission, by setting the bias supplied to the transmitter unit 7 to the low bias before transmission, and to the bias for normal operation just before transmission, such an advantage is obtained that the current consumption of the transmitter unit 7 except for transmission can be reduced.

### (Third embodiment)

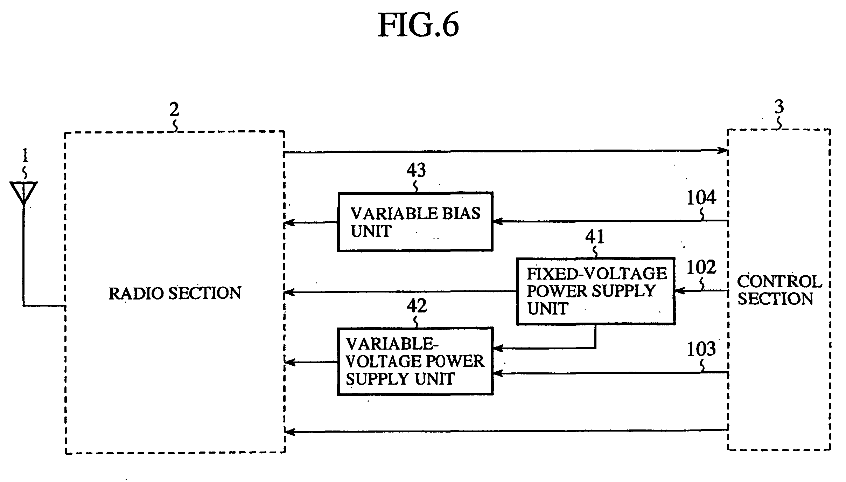

Fig. 6 is a block diagram showing the construction of the mobile radio communication device according to a third embodiment for carrying out this invention, and this embodiment has both the variable-voltage power supply unit 42 of the first embodiment and the variable bias unit 43 of the second embodiment. Further, the radio section 2 and the control section 3, not shown, include the same structural elements as Fig. 3 of the first embodiment.

The operation is now described.

The power supply voltage control timing and the bias control timing according to the third embodiment for carrying out this invention are similar to the power supply voltage control timing of Fig. 4 of the first embodiment. As in the first embodiment and the second embodiments, when full performance is not needed, for instance, at the time of monitoring, the power supply voltage and bias of each unit are variably controlled by the variable-voltage power supply unit 42 and the variable bias unit 43 to reduce the current consumption.

At the time of monitoring, since the power supply voltage supplied to the receiver unit 6 and the synthesizer unit 8 is set to be lower than the power supply voltage for normal operation, and the bias is also set to be smaller than the bias for normal operation, as compared with the normal reception, the gain of the whole receiver unit 6 becomes lower. Thus, previously stored in the memory 34 is a gain difference between the gain at the detection of receive field strength when the power supply voltage of the receiver unit 6 and the synthesizer unit 8 is a power supply voltage VH for normal operation and also the bias is the bias for normal operation, and that when the power supply voltage is a power supply voltage VL lower than the power supply voltage VH for normal operation and also the bias is lower than the bias for normal operation, and a CPU, not shown, in the control section 3 uses the gain difference to correct the receive field strength detected at the time of monitoring.

In this case, in the structural elements of the radio section 2, the current consumption can more effectively be reduced by appropriately selecting the portions to be controlled by the variable-voltage power supply unit 42 and the portions to be controlled by the variable bias unit 43, respectively.

As described above, in accordance with the third embodiment, by variably controlling the power supply voltage and bias of each unit by the variable-voltage control unit 42 and the variable bias unit 43, such an advantage is obtained that the current consumption in portions requiring no full performance can be reduced except for reception or transmission.

Further, in accordance with the third embodiment, at the time of idling other than reception, by setting the power supply voltage supplied to the synthesizer unit 8 to the low power supply voltage, and setting the bias supplied to the synthesizer unit 8 to the small bias, and at the time of reception, by setting the power supply voltage supplied to the synthesizer unit 8 to the power supply voltage for normal operation, and setting the bias supplied to the synthesizer unit 8 to the bias for normal operation, such an advantage is provided that the current consumption can be reduced in the synthesizer unit 8, in which a certain time is required until the frequency of the output local oscillation signal converges.

Further, in accordance with the third embodiment, by turning OFF the power supply voltage of the receiver unit 6 except for reception, and when starting reception, by setting the power supply voltage supplied to the receiver unit 6 to the low power supply voltage VL and setting the bias supplied to the receiver unit 6 to the small bias before reception, and by setting the power supply voltage supplied to the receiver unit 6 to the power supply voltage VH for normal operation and setting the bias supplied to the receiver unit 6 to the bias for normal operation just before reception, such an advantage is provided that the current consumption of the receiver unit 6 except for reception can be reduced.

Further, in accordance with the third embodiment, by turning OFF the power supply voltage of the transmitter unit 7 except for transmission, and when starting transmission, by setting the power supply voltage supplied to the transmitter unit 7 to the low power supply voltage VL and setting the bias supplied to the transmitter unit 7 to the small bias before transmission, and by setting the power supply voltage supplied to the transmitter unit 7 to the power supply voltage VH for normal operation and setting the bias supplied to the transmitter unit 7 to the bias for normal operation just before transmission, such an advantage is obtained that the current consumption in the transmitter unit 7 except for transmission can be reduced.

### Industrial Applicability

As described above, the mobile radio communication device related to this invention is suitable for variably controlling the power supply voltage and bias of each unit in response to the operation state to reduce the current consumption in portions requiring no full performance.

## Claims

1. A mobile radio communication device comprising:
a receiver unit for receiving transmitted radio waves;
a synthesizer unit for outputting a local oscillation signal by which said receiver unit carries out a frequency conversion;
a variable-voltage power supply unit for supplying to said receiver unit and said synthesizer unit a first power supply voltage that is the power supply voltage for normal operation, or a second power supply voltage that is lower than the first power supply voltage within their operation range;
a control signal processing unit for outputting a voltage control signal by which said variable-voltage power supply unit outputs said first power supply voltage or said second power supply voltage;
a field strength detecting unit for detecting the receive field strength when said receiver unit receives a radio wave; and
a memory for previously storing a gain difference between the gain at the detection of said receive field strength when the power supply voltage supplied from said variable-voltage power supply unit to said receiver unit and said synthesizer unit is said first power supply voltage and that when said power supply voltage is said second power supply voltage;
wherein, when said field strength detecting unit detects said receive field strength, the power supply voltage to be supplied from said variable-voltage power supply unit to said receiver unit and said synthesizer unit is set to said second power supply voltage by the voltage control signal from said control signal processing unit, and the detected said memory.

2. A mobile radio communication device according to claim 1, wherein, at the time of idling other than reception, the power supply voltage supplied from the variable-voltage power supply unit to the synthesizer unit is set to the second power supply voltage by a voltage control signal output from the control signal processing unit, and at the time of reception, the power supply voltage supplied from said variable-voltage power supply unit to said synthesizer unit is set to the first power supply voltage by the voltage control signal output from said control signal processing unit.

3. A mobile radio communication device according to claim 1,
wherein the power supply voltage of the receiver unit is turned OFF except for reception, and to start reception, the power supply voltage supplied from the variable-voltage power supply unit to said receiver unit is set, before reception, to the second power supply voltage by the voltage control signal output from the control signal processing unit, and the power supply voltage supplied from said variable-voltage power supply unit to said receiver unit is set, just before reception, to the first power supply voltage by the voltage control signal output from said control signal processing unit.

4. A mobile radio communication device according to claim 1, including a transmitter unit for transmitting a radio wave,
wherein the power supply voltage of said transmitter unit is turned OFF except for transmission, and to start transmission, the power supply voltage supplied from the variable-voltage power supply unit to said transmitter unit is set, before transmission, to the second power supply voltage by the voltage control signal output from the control signal processing unit, and the power supply voltage supplied from said variable-voltage power supply unit to said transmitter unit is set, just before transmission, to the first power supply voltage by the voltage control signal output from said control signal processing unit.

5. A mobile radio communication device comprising:
a receiver unit for receiving transmitted radio waves;
a synthesizer unit for outputting a local oscillation signal by which said receiver unit carries out a frequency conversion;
a variable bias unit for supplying to said receiver unit and said synthesizer unit a first bias that is the bias for normal operation, or a second bias that is lower than said first bias within their operation range;
a control signal processing unit for outputting a bias control signal by which said variable bias unit outputs said first bias or said second bias;
a field strength detecting unit for detecting the receive field strength when said receiver unit receives radio waves; and
a memory for previously storing a gain difference between the gain at the detection of said receive field strength when the bias supplied from said variable bias unit to said receiver unit and said synthesizer unit is the first bias and that when said bias is the second bias;
wherein, when said field strength detecting unit detects said receive field strength, the bias supplied from said variable bias unit to said receiver unit and said synthesizer unit is set to said second bias by a bias control signal from said control signal processing unit, and the detected receive field strength is corrected according to the gain difference stored in said memory.

6. A mobile radio communication device according to claim 5,
wherein, at the time idling other than receiving, the bias supplied from the variable bias unit to the synthesizer unit is set to the second bias by a bias control signal output from the control signal processing unit, and at the time of reception, the bias supplied from said variable bias unit to said synthesizer unit is set to the first bias by the bias control signal output from said control signal processing unit.

7. A mobile radio communication device according to claim 5,
wherein the power supply voltage of the receiver unit is turned OFF except for reception, and to start reception, the bias supplied from the variable bias unit to said receiver unit is set, before reception, to the second bias by the bias control signal output from the control signal processing unit, and the bias supplied from said variable bias unit to said receiver unit is set, just before reception, to the first bias by the bias control signal output from said control signal processing unit.

8. A mobile radio communication device according to claim 5, including a transmission unit for transmitting a radio wave,
wherein the power supply voltage of said transmission unit is turned OFF except for transmission, and to start transmission, the bias supplied from the variable bias unit to said transmission unit is set, before transmission, to the second bias by the bias control signal output from the control signal processing unit, and the bias supplied from said variable bias unit to said transmission unit is set, just before transmission, to the first bias by the bias control signal output from said control signal processing unit.

9. A mobile radio communication device comprising:
a receiver unit for receiving transmitted radio waves;
a synthesizer unit for outputting a local oscillation signal by which said receiver unit carries out a frequency conversion;
a variable-voltage power supply unit for supplying to said receiver unit and said synthesizer unit a first power supply voltage that is the power supply voltage for normal operation, or a second power supply voltage that is lower than said first power supply voltage within their operation range;
a variable bias unit for supplying to said receiver unit and said synthesizer unit a first bias that is the bias for normal operation, or a second bias that is lower than said first bias within their operation range;
a control signal processing unit for outputting a voltage control signal by which said variable-voltage power supply unit outputs the first power supply voltage or the second power supply voltage, and by which said variable bias unit outputs the first bias or the second bias;
a field strength detecting unit for detecting the receive field strength when said receiver unit receives a radio wave; and
a memory for previously storing a gain difference between the gain at the detection of said receive field strength when the power supply voltage supplied from said variable-voltage power supply unit to said receiver unit and said synthesizer unit is the first power supply voltage, while the bias supplied from said variable bias unit to said receiver unit and said synthesizer unit is the first bias, and that when the power supply voltage supplied from said variable-voltage power supply unit to said receiver unit and said synthesizer unit is the second power supply voltage, while the bias supplied from said variable bias unit to said receiver unit and said synthesizer unit is the second bias;
wherein, when said field strength detecting unit detects the receive field strength, the power supply voltage to be supplied from said variable-voltage power supply unit to said receiver unit and said synthesizer unit is set to the second power supply voltage by the voltage control signal from said control signal processing unit, while the bias to be supplied from said variable bias unit to said receiver unit and said synthesizer unit is set to the second bias, and the detected receive field strength is corrected according to the gain difference stored in said memory.

10. A mobile radio communication device according to claim 9, wherein, at the time of idling other than reception, the power supply voltage supplied from the variable-voltage power supply unit to the synthesizer unit is set to the second power supply voltage by a voltage control signal output from the control signal processing unit, while the bias supplied from the variable bias unit to the synthesizer unit is set to the second bias by a bias control signal output from said control signal processing unit, and at the time of reception, the power supply voltage supplied from said variable-voltage power supply unit to said synthesizer unit is set to the first power supply voltage by the voltage control signal output from said control signal processing unit, while the bias supplied from said variable bias unit to said synthesizer unit is set to the first bias by the bias control signal output from said control signal processing unit.

11. A mobile radio communication device according to claim 9, wherein the power supply voltage of the receiver unit is turned OFF except for reception, and to start reception, before reception, the power supply voltage supplied from the variable-voltage power supply unit to said receiver unit is set to the second power supply voltage by the voltage control signal output from the control signal processing unit, while the bias supplied from the variable bias unit to the receiver unit is set to the second bias by the bias control signal output from the control signal processing unit, and just before reception, the power supply voltage supplied from said variable-voltage power supply unit to said receiver unit is set to the first power supply voltage by the voltage control signal output from said control signal processing unit, while the bias supplied from said variable bias unit to said receiver unit is set to the first bias by the bias control signal output from said control signal processing unit.

12. A mobile radio communication device according to claim 9, including a transmitter unit for transmitting a radio wave,
wherein the power supply voltage of said transmitter unit is turned OFF except for transmission, and to start transmission, before transmission, the power supply voltage supplied from the variable-voltage unit to said transmitter unit is set to the second power supply voltage by the voltage control signal output from the control signal processing unit, while the bias supplied from the variable bias unit to said transmitter unit is set to the second bias by the bias control signal output from the control signal processing unit, and just before transmission, the power supply voltage supplied from said variable-voltage power supply unit to said transmitter unit is set to the first power supply voltage by the voltage control signal that is output from said control signal processing unit, while the bias supplied from said variable bias unit to said transmitter unit is set to the first bias by the bias control signal output from said control signal processing unit.
